# EUROPÄISCHE PATENTSCHRIFT

(11) **EP 0 779 112 B1**
(45) Veröffentlichungstag und Bekanntmachung des Hinweises auf die Patenterteilung: **29.09.1999**
(21) Anmeldenummer: 96250262.1
(22) Anmeldetag: 19.11.1996
(51) Int. Cl.: B21B 38/12, G01B 7/287, G01B 5/207

(54) **Sensorträger**
Sensor support
Support de capteurs

(30) Priorität: 11.12.1995 DE 19547438
(43) Veröffentlichungstag der Anmeldung: 18.06.1997
(73) Patentinhaber: MANNESMANN Aktiengesellschaft, 40213 Düsseldorf (DE)
(72) Erfinder: Cerv, Horst, Dr.-Ing., 40882 Ratingen (DE)
(74) Vertreter: Meissner, Peter E., Dipl.-Ing.

(56) Entgegenhaltungen:
- EP-A- 0 127 263
- EP-A- 0 292 123
- TETSU TO HAGANE: JOURNAL OF THE IRON AND STEEL INSTITUTE OF JAPAN, Bd. 79, Nr. 7, 1.Januar 1993, Seiten 800-807, XP000393699 FUMIHIKO ICHIKAWA ET AL: "ON-LINE MEASUREMENT OF WORK ROLL PROFILE IN A HOT STRIP FINISHING MILL"
- PATENT ABSTRACTS OF JAPAN vol. 016, no. 051 (M-1209), 10.Februar 1992 & JP 03 254305 A (HITACHI LTD), 13.November 1991,

## Beschreibung

Die Erfindung betrifft eine Konturmeßeinrichtung, insbesondere zur Messung der Kontur von im Walzgerüst eingebauten Warmbandwalzen beim Walzvorgang gemäß dem Oberbegriff des Anspruchs 1.
Eine derartige Meßeinrichtung ist aus dem JP-Abstract 60-180610 A bekannt.

Ein Vierwalzengerüst zum Walzen von Metallbändern mit in Einbaustücken drehbar gelagerten zwei Arbeits- sowie zwei Stützwalzen ist beispielsweise aus der DE-A-2 260 256 bekannt. Prozeßbedingt kommt es beim Walzen zu einem starken Verschleiß der Walzenoberflächen, vor allem der Arbeitswalzen. Besonders im Bereich der Kanten des Walzgutes entstehen in der Walzenoberfläche lokale Vertiefungen, sogenannte Verschleißmarken, die verstärkt auftreten, wenn fortlaufend Metallbänder gleicher Breite gewalzt werden. Mit fortschreitendem Verschleiß der Walzen nimmt deshalb die Planheit der gewalzten Metallbänder drastisch ab. Um dies zu verhindern bzw. zu vermindern, ist es erforderlich, die Walzen in zyklischen Abständen nachzuschleifen oder zu wechseln. Diese Abstände sind im allgemeinen starr festgelegt und richten sich nach den gewonnenen Betriebserfahrungen. Da der Verschleiß der Walzen unregelmäßig ist, werden die Erneuerungszyklen der Walzen bzw. Walzenoberflächen in nicht optimaler, d.h. kostengünstigster Weise durchgeführt.

Will man den exakten Zeitpunkt für ein Nachschleifen oder Auswechseln der Walze erkennen, so ist es erforderlich, den Verschleiß der Walzen kontinuierlich zu erfassen. Das kann z.B. durch die Messung der Kontur der Walzenoberfläche in entsprechenden zeitlichen Abständen mit entsprechender Meßgenauigkeit geschehen. Aus der Differenz zwischen ursprünglicher und aktueller Walzenkontur läßt sich dann der Verschleiß der Walze exakt bestimmen. Üblicherweise wird zum Messen ein Abstandssensor längs über die Walzenoberfläche geführt.

Ein an Walzenschleifmaschinen eingesetzter mechanischer Abstandssensor ist beispielsweise aus der EP-B1-0239161 bekannt. Mit diesem Abstandssensor ist es aber nicht möglich, insbesondere aufgrund der ungünstigen Umfeldbedingungen, speziell der hohen im Bereich der Walzen auftretenden Temperaturen, die Kontur der heißen Walzenoberfläche direkt im Gerüst zu messen, da aufgrund von thermischen Dehnungen der Meßfehler zu groß ist. Außerdem dauert die Messung mit einer solchen Meßeinrichtung relativ lange, was insofern von Nachteil ist, da der thermische Ballen der Walze sich bereits nach einer Minute deutlich zurückzubilden beginnt, man aber in erster Linie an einer exakten Erfassung auch des thermischen Ballens, d.h. der wirklichen Kontur der heißen Walzenoberfläche während des Walzprozesses, interessiert ist. Eine hochgenaue Erfassung der Walzenkontur beim Walzvorgang ist mit einer derartigen Meßeinrichtung nicht möglich.

Es ist Aufgabe der vorliegenden Erfindung, eine Konturmeßeinrichtung zur Messung der Walzenkontur, insbesondere von im Walzgerüst eingebauten Warmbandwalzen, zu schaffen, die es ermöglicht, mit hoher Meßgenauigkeit in jedem Verschleißzustand die Kontur der heißen Walze (den thermischen Ballen) über die gesamte Walzenlänge beim Walzvorgang zu ermitteln.

Die Lösung dieser Aufgabe ist erfindungsgemäß gekennzeichnet durch die im Patentanspruch 1 angegebenen Merkmale. Durch die kennzeichnenden Merkmale der Unteransprüche 2 bis 11 ist diese Meßeinrichtung in vorteilhafter Weise weiter ausgestaltbar.

Die Erfindung sieht vor, an einem sich über die Walzenlänge erstreckenden Längsträger quer zur Walzenlängsachse eine Vielzahl von gekühlten berührungslos messenden Abstandssensoren mit seitlichem Abstand zueinander anzuordnen.

Dadurch wird erreicht, daß die Erfassung der Walzenkontur unter den extrem ungünstigen Umfeldbedingungen im Walzgerüst während des Walzvorgangs mit hoher Meßgenauigkeit ausführbar ist. Insbesondere läßt sich mit einer derartigen Konturmeßeinrichtung der Meßfehler aufgrund von thermischen Verformungen der Meßeinrichtung sehr gering halten. Eine Vielzahl von Abstandssensoren mit Abstand zueinander am Längsträger anzuordnen, hat weiterhin den Vorteil, daß die Abstandssensoren zur Messung der Walzenkontur nicht über die gesamten Walzenlänge geführt werden müssen. Anhand der während des Walzvorgangs erfaßten Walzenkontur kann ferner auch die Walzenbiegung ermittelt, angezeigt und über entsprechende Stellglieder verändert werden, unter anderem zur gezielten Einstellung des Walzspalts, wodurch sich wiederum die Planheit und Maßhaltigkeit der Bänder erhöhen läßt.

Zur Kühlung der Abstandssensoren ist der Längsträger als Doppelmantelrohr mit einem Innenrohr zur Durchleitung eines Kühlmediums und einem das Innenrohr unter Belassung eines Ringraums umgebenden Mantelrohr ausgebildet ist. Dabei ist das Innenrohr vorteilhafterweise an den Enden am Mantelrohr befestigt, um keine Wärmebrücken im mittleren Rohrbereich zu haben.

Zweckmäßigerweise wird das Kühlmedium auch zur Kühlung des Mantelrohrs verwendet, indem seine Einleitung an einem Ende des Innenrohrs und seine Rückführung durch den Ringraum erfolgt.

Eine starke thermische Entkopplung wird dadurch erzielt, daß die Abstandssensoren nur am Innenrohr befestigt sind.

Zur Durchführung der Messungen sind im Mantelrohr Öffnungen vorgesehen, durch welche die Abstandssensoren die Wand des Mantelrohrs unter Belassung eines Ringspaltes durchdringen, so daß das durch die Ringspalte austretende Kühlmittel eine Kühlung der Abstandssensorköpfe sichergestellt ist. Die Messung erfolgt damit mit definierter konstanter Temperatur für alle Abstandssensoren.

Damit Eigenschwingungen zu keiner Verfälschung der Meßergebnisse führen können, erfolgt deren Dämpfung vorteilhafterweise durch Aufbringung einer Vorspannung in Richtung Längsachse des Längsträgers.

Das wechselweise Vermessen der Arbeitswalze und der Stützwalze erfolgt vorzugsweise durch Kippung des Längsträgers um eine zu seiner Längsachse parallelen Achse mittels einer entsprechenden Kippvorrichtung.

Besonders genaue Messungen ermöglichen als Wirbelstromsensoren ausgebildete Abstandssensoren, die dazu zweckmäßigerweise parallel zueinander und radial auf die Walzenoberfläche ausgerichtet sind.

Darüber hinaus ist der Längsträger mit Vorteil aus einer Parkposition in eine Meßposition parallel zur Achse der Walze verfahrbar ausgebildet. Dadurch wird erreicht, daß der Längsträger und die Abstandssensoren nur während der Meßdauer den ungünstigen Umfeldbedingungen im Walzgerüst ausgesetzt sind, wodurch sich insbesondere die Lebensdauer der Abstandssensoren erhöht.

Die Erfindung läßt sich sowohl in Zweiwalzengerüsten wie auch an Mehr-oder Vierwalzengerüsten anwenden und sowohl in Walzwerken für Flachprodukte wie auch Profile einsetzen.

Ein Ausführungsbeispiel der Erfindung ist in der Zeichnung dargestellt und wird nachfolgend näher beschrieben. Es zeigen:
- Fig. 1: einen Längsschnitt durch einen als Doppelmantelrohr ausgebildeten Längsträger,
- Fig. 2: einen Querschnitt durch den Längsträger nach Fig. 1 und
- Fig. 3: einen Querschnitt und einen Längsschnitt durch den Längsträger bei Betrieb der Meßeinrichtung.

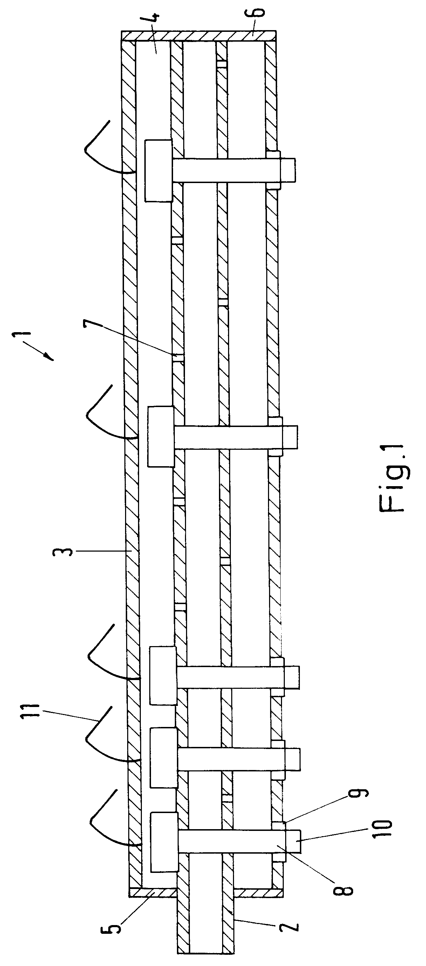

Fig. 1 zeigt einen Längsschnitt durch den Längsträger 1 einer Konturmeßeinrichtung, die insbesondere zur Vermessung des Profils von im Walzgerüst eingebauten Warmbandwalzen während des Walzvorgangs geeignet ist. Der Längsträger 1 ist dabei, wie Fig. 1 erkennen läßt, als Hohlprofil mit einem Doppelmantel, vorzugsweise als Doppelmantelrohr, ausgebildet, wobei das Innenrohr 2 und das Mantelrohr 3 koaxial unter Belassung eines Ringraums 4 zueinander fest angeordnet sind. Im Bereich der Stirnseiten ist das Mantelrohr 3 verschlossen, wobei das Innenrohr 2 die Seitenwand 5 des Mantelrohrs 3 auf einer Seite durchdringt und auf der gegenüberliegenden Seite an der Seitenwand 6 des Mantelrohrs 3 befestigt ist. Das Mantelrohr 3 und das lnnenrohr 2 sind also nur an zwei Stellen miteinander verbunden, so daß im mittleren Bereich des Doppelmantelrohrs keine weiteren Wärmebrücken vorhanden sind. Das Innenrohr 2 ist auf der das Mantelrohr 3 durchdringenden Seite mit einer Kühlmittelzuführung (nicht gezeigt) verbunden; als Kühlmittel wird üblicherweise Wasser verwendet. Dabei weist das Innenrohr 2 eine Vielzahl von Öffnungen 7 auf, durch die das druckbeaufschlagte Kühlmittel bei Betrieb des Doppelmantelrohrs in den Ringraum 4 fließt. Wie aus Fig. 1 zu erkennen ist, sind ferner eine Vielzahl von Abstandssensoren 8 mit seitlichem Abstand parallel zueinander und das Innenrohr 2 radial durchdringend am Innenrohr 2 befestigt. Dabei kann der Abstand der Abstandssensoren 8 zueinander in Abhängigkeit von der gewünschten Auflösung variieren; bei erfahrungsgemäß geringen Konturänderungen pro Längeneinheit der Walze kann der Abstand relativ groß gewählt werden. Im Bereich starker Profiländerungen muß der Abstand der Abstandssensoren 8 dagegen deutlich kleiner gewählt werden, um den Konturverlauf korrekt zu erfassen. Die Abstandssensoren 8 sind parallel zueinander ausgerichtet und durchdringen das Mantelrohr 3 radial an speziell dafür vorgesehenen Öffnungen 9, so daß deren Meßköpfe 10 ein wenig aus dem Mantelrohr herausragen. Die Öffnungen 9 im Mantelrohr 3 sind mit einem größeren Durchmesser als die Abstandssensoren 8 versehen, was den Austritt von Kühlmittel durch den dadurch gebildeten Ringspalt ermöglicht. Die elektrischen Verbindungsleitungen 11 der Abstandssensoren 8 werden auf der den Mantelöffnungen 9 gegenüberliegenden Seite durch das Mantelrohr 3 geführt und mit den entsprechenden Steuer- und Auswerteeinrichtungen (nicht gezeigt) verbunden.

Zur Dämpfung von Eigenschwingungen ist das Trägerrohr 1 mit einer Vorspannung parallel zu seiner Längsachse beaufschlagbar, indem beispielsweise Zuganker über die Länge des Mantelrohres verteilt angeordnet sind, insbesondere, um eine bei Betrieb der Konturmeßeinrichtung nicht störende Eigenfrequenz einzustellen, d. h. die Eigenfrequenz des Längsträgers in einen günstigeren Bereich zu verschieben. Durch eine günstige Wahl der Werkstoffe und der Abmessungen läßt sich die Wahrscheinlichkeit für das Auftreten von unerwünschten Eigenschwingungen des Längsträgers 1 weiter verringern. Insbesondere die Verwendung von Hohlkörpem mit nichtkreisförmigem, sondern beispielsweise elliptischem Querschnitt ist eine elegante Variante zur Unterdrückung von Eigenfrequenzen.

Bei den Abstandssensoren 8 handelt es sich im Ausführungsbeispiel um Wirbelstromsensoren, die sich aufgrund ihrer Unempfindlichkeit besonders gut für genaue berührungslose Abstandsmessungen eignen.

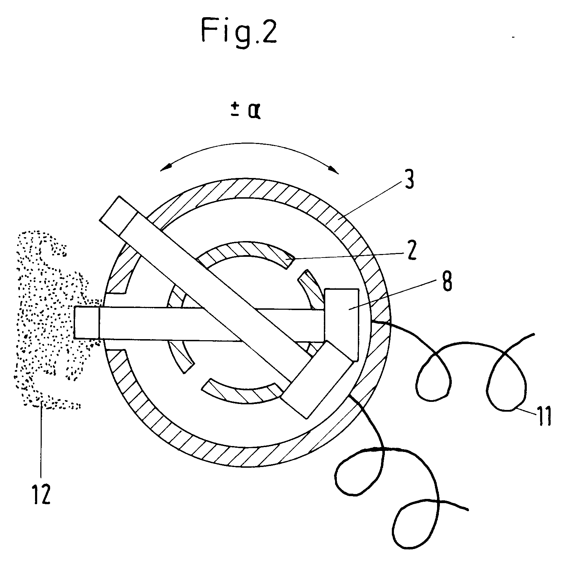

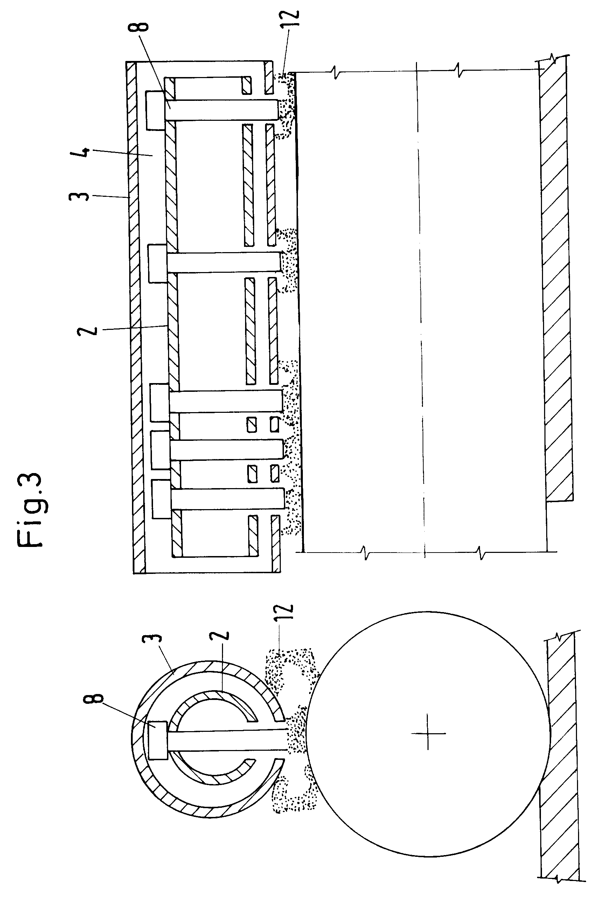

Der Längsträger ist 1 über einen Schlitten aus einer geschützten Parkposition in eine Meßposition parallel zur Achse der zu vermessenden Walze verfahrbar. Zusätzlich ist die Halterung des Längsträgers so ausgeführt, daß dieser mittels einer Kippvorrichtung (ebenfalls nicht gezeigt) verkippbar ist, wie Fig. 2 deutlicher erkennen läßt. Dies ermöglicht es, bei entsprechender Anordnung des Längsträgers die Stützwalze und die Arbeitswalze wechselweise zu vermessen, indem der Längsträger einfach zur entsprechenden Walze hin verkippt wird. Zweckmäßigerweise sind die parallel zueinander angeordneten Abstandssensoren 8 in den beiden Meßpositionen radial auf die zu vermessende Walzenoberfläche ausgerichtet. Fig. 3 zeigt in schematischer Darstellung einen Querschnitt und einen Längsschnitt durch den Längsträger in der Meßpositionwährend der Messung.

Die Funktionsweise der Konturmeßeinrichtung ist wie folgt:

Zu Beginn des Walzprozesses wird der Längsträger 1 mit den Abstandssensoren 8 aus der Parkposition in die Meßposition parallel zur Achse der Walze verfahren und die Abstandssensoren 8 durch Kippung um die Längsträgerachse radial auf die entsprechende Walzenoberfläche ausgerichtet. Dabei weisen die Sensorköpfe der Abstandssensoren 8 einen vorgegebenen Abstand von der Walzenoberfläche auf. Zur Kühlung wird ein entsprechendes Kühlmittel (Wasser) in das Innenrohr 2 geleitet. Dieses umströmt die Abstandssensoren 8, wodurch diese gekühlt werden, und fließt durch die Öffnungen 7 im Innenrohr in den Ringraum des Doppelmantelrohrs, so daß das Mantelrohr 3 ebenfalls gekühlt wird. Das Kühlmittel verläßt den Längsträger 1 durch die Ringspaltöffnungen 9 unter Kühlung insbesondere der Abstandssensorköpfe 10. Die austretende Kühlflüssigkeit bildet zwischen Walzenoberfläche und Abstandssensorkopf 10 eine in Fig. 2 schematisch angedeutete Flüssigkeits-Dampf-Atmosphäre 12, die gleichzeitig als Wärmeschutzschild im Bereich des Abstandssensorkopfs 10 wirkt. Die nur am Innenrohr befestigten Abstandssensoren 8 werden durch das Kühlmittel derart gekühlt, daß sie alle dieselbe Temperatur (bzw. denselben Temperaturverlauf über die Sensorlänge) aufweisen. Durch das am Ringspalt austretende Kühlmittel wird eine besonders intensive Kühlung der Abstandssensorköpfe 10 erreicht. Dabei sind Wirbelstromsensoren für diese Art der Kühlung besonders gut geeignet, weil das dielektrische Kühlmittel keinen zusätzlichen Meßfehler verursacht. Ferner ermöglichen es Wirbelstromsensoren, neben der Bestimmung der Walzenkontur auch vorhandene Gefügeveränderungen im Oberflächenbereich der Walze zu erfassen.

Anhand der während des Walzvorgangs erfaßten Walzenkontur kann ferner auch die Walzenbiegung ermittelt, angezeigt und über entsprechende Stellglieder gezielt verändert werden, unter anderem zur Einstellung oder Nachkorrektur des Walzspalts, wodurch sich wiederum die Planheit und Maßhaltigkeit der Bänder deutlich erhöhen läßt.

### BEZUGSZEICHENLISTE:

- 1: Längsträger
- 2: Innenrohr
- 3: Mantelrohr
- 4: Ringraum
- 5: Seitenwand
- 6: Seitenwand
- 7: Öffnung
- 8: Abstandssensor
- 9: Öffnung
- 10: Meßkopf
- 11: elektrische Verbindungsleitung
- 12: Flüssigkeits-Dampf-Atmosphäre

## Patentansprüche

1. Konturmeßeinrichtung zur Messung der Kontur von im Walzgerüst eingebauten Warrnbandwalzen beim Walzvorgang, mit mindestens einem Abstandssensor (8), dessen Meßkopf (10) auf die Walzenoberfläche ausgerichtet ist, wobei an einem sich über die Walzenlänge erstreckenden Längsträger (1) quer zur Walzenlängsachse eine Vielzahl von berührungslos messenden Abstandssensoren (8) mit seitlichem Abstand zueinander angeordnet sind,
**dadurch gekennzeichnet,**
daß der Längsträger (1) zur Kühlung der Abstandssensoren (8) als Doppelmantelrohr mit einem Innenrohr (2) zur Durchleitung eines Kühlmediums und einem das Innenrohr (2) unter Belassung eines Ringraums (4) umgebenden Mantelrohr (3) ausgebildet ist, wobei das Innenrohr (2) an den Enden gegenüber dem Mantelrohr (3) fixiert ist.

2. Konturmeßeinrichtung nach Anspruch 1,
**dadurch gekennzeichnet,**
daß der Längsträger (1) derart ausgebildet ist, daß das Kühlmedium an einem Ende in das Innenrohr (2) einleitbar ist und daß eine Rückströmung des Kühlmediums durch den Ringraum (4) erfolgt.

3. Konturmeßeinrichtung nach Anspruch 1 oder 2,
**dadurch gekennzeichnet,**
daß die Abstandssensoren (8) am Innenrohr (2) befestigt sind.

4. Konturmeßeinrichtung nach einem oder mehreren der Ansprüche 1 bis 3,
**dadurch gekennzeichnet,**
daß im Mantelrohr (3) Öffnungen (9) vorgesehen sind, durch welche die Abstandssensoren (8) die Wand des Mantelrohrs (3) durchdringen.

5. Konturmeßeinrichtung nach Anspruch 4,
**dadurch gekennzeichnet,**
daß die Abstandssensoren (8) die Öffnungen (9) unter Belassung eines Ringspaltes durchdringen.

6. Konturmeßeinrichtung nach einem oder mehreren der Ansprüche 1 bis 5,
**dadurch gekennzeichnet,**
daß dem Längsträger (1) in Richtung zu seiner Längsachse eine Vorspannung aufgebracht ist.

7. Konturmeßeinrichtung nach einem oder mehreren der Ansprüche 1 bis 6,
**dadurch gekennzeichnet,**
daß der Längsträger (1) eine Kippvorrichtung zur Kippung um eine zu seiner Längsachse parallelen Achse aufweist.

8. Konturmeßeinrichtung nach einem oder mehreren der Ansprüche 1 bis 7,
**dadurch gekennzeichnet,**
daß die Abstandssensoren (8) als Wirbelstromsensoren ausgebildet sind.

9. Konturmeßeinrichtung nach einem oder mehreren der Ansprüche 1 bis 8,
**dadurch gekennzeichnet,**
daß die Abstandssensoren (8) parallel zueinander und radial auf die Walzenoberfläche ausgerichtet sind.

10. Konturmeßeinrichtung nach Anspruch 1,
**dadurch gekennzeichnet,**
daß der Längsträger (1) aus einer Parkposition in eine Meßposition parallel zur Achse der Walze verfahrbar ist.

## Claims

1. A contour measuring device for measuring the contour of hot strip rolls installed in the roll stand during the rolling process, comprising at least one distance sensor (8), whose measuring head (10) is oriented towards the roll surface, a plurality of contactlessly measuring distance sensors (8) being arranged in laterally spaced manner perpendicularly to the longitudinal axis of the roll on a longitudinal beam (1) extending over the roll length,
characterised in that,
for the purpose of cooling the distance sensors (8), the longitudinal beam (1) is constructed as a double shell tube having an inner tube (2) for passage of a coolant and a jacket tube (3) which surrounds the inner tube (2) while leaving an annular space (4), the inner tube (2) being fixed at the ends with respect to the jacket tube (3).

2. A contour measuring device according to claim 1,
characterised in that the longitudinal beam (1) is so constructed that the coolant may be introduced into the inner tube (2) at one end and in that the coolant is fed back through the annular space (4).

3. A contour measuring device according to claim 1 or claim 2, characterised in that the distance sensors (8) are attached to the inner tube (2).

4. A contour measuring device according to one or more of claims 1 to 3, characterised in that openings (9) are provided in the jacket tube (3), through which openings (9) the distance sensors (8) pass through the wall of the jacket tube (3).

5. A contour measuring device according to claim 4,
characterised in that the distance sensors (8) pass through the openings (9) leaving an annular gap.

6. A contour measuring device according to one or more of claims 1 to 5, characterised in that prestress is applied to the longitudinal beam (1) in the direction of its longitudinal axis.

7. A contour measuring device according to one or more of claims 1 to 6, characterised in that the longitudinal beam (1) comprises a tilting device for tilting about an axis parallel to its longitudinal axis.

8. A contour measuring device according to one or more of claims 1 to 8, characterised in that the distance sensors (8) take the form of eddy-current sensors.

9. A contour measuring device according to one or more of claims 1 to 8, characterised in that the distance sensors (8) are oriented in parallel with one another and radially with respect to the roll surface.

10. A contour measuring device according to claim 1,
characterised in that the longitudinal beam (1) may be moved out of a parked position into a measuring position parallel to the axis of the roll.

## Revendications

1. Dispositif de mesure de contour pour mesurer le contour de cylindres pour feuillards laminés à chaud montés dans la cage de laminoir lors du processus de laminage, comportant au moins un capteur de proximité (8), dont la tête de mesure (10) est alignée sur la surface des cylindres, une pluralité de capteurs de proximité (8) mesurant sans contact étant agencés à distance latérale les uns des autres sur un support longitudinal (1) s'étendant sur la longueur des cylindres transversalement à l'axe longitudinal des cylindres,
caractérisé en ce que le support longitudinal (1), pour refroidir les capteurs de proximité (8), est réalisé comme tube à double enveloppe ayant un tube interne (2) pour transporter un fluide de refroidissement et un tube d'enveloppe (3) entourant le tube interne (2) en laissant un espace annulaire (4), le tube interne (2) étant fixé aux extrémités par rapport au tube d'enveloppe (3).

2. Dispositif de mesure de contour selon la revendication 1,
caractérisé en ce que le support longitudinal (1) est réalisé de sorte que le fluide de refroidissement peut être introduit à une extrémité dans le tube interne (2), et en ce qu'une circulation en retour du fluide de refroidissement est effectuée à travers l'espace annulaire (4).

3. Dispositif de mesure de contour selon la revendication 1 ou 2,
caractérisé en ce que les capteurs de proximité (8) sont fixés au tube interne (2).

4. Dispositif de mesure de contour selon une ou plusieurs des revendications 1 à 3,
caractérisé en ce que, dans le tube d'enveloppe (3), sont prévues des ouvertures (9) à travers lesquelles les capteurs de proximité (8) traversent la paroi du tube d'enveloppe (3).

5. Dispositif de mesure de contour selon la revendication 4,
caractérisé en ce que les capteurs de proximité (8) traversent les ouvertures (9) en laissant une fente annulaire.

6. Dispositif de mesure de contour selon une ou plusieurs des revendications 1 à 5,
caractérisé en ce qu'une précontrainte est appliquée au support longitudinal (1) en direction de son axe longitudinal.

7. Dispositif de mesure de contour selon une ou plusieurs des revendications 1 à 6,
caractérisé en ce que le support longitudinal (1) présente un dispositif de basculement pour basculer autour d'un axe parallèle à son axe longitudinal.

8. Dispositif de mesure de contour selon une ou plusieurs des revendications 1 à 7,
caractérisé en ce que les capteurs de proximité (8) sont réalisés comme capteurs de courants parasites.

9. Dispositif de mesure de contour selon une ou plusieurs des revendications 1 à 8,
caractérisé en ce que les capteurs de proximité (8) sont alignés parallèlement les uns aux autres et radialement sur la surface des cylindres.

10. Dispositif de mesure de contour selon la revendication 1,
caractérisé en ce que le support longitudinal (1) est déplacable d'une position d'attente dans une position de mesure parallèlement à l'axe du cylindre.
